# EUROPEAN PATENT APPLICATION

(11) **EP 4 339 829 A1**
(43) Date of publication of application: **20.03.2024**
(21) Application number: 22807342.5
(22) Date of filing: 26.04.2022
(51) Int. Cl.: G06F 40/247

(54) **SYNONYM DETERMINATION SYSTEM AND SYNONYM DETERMINATION METHOD**

(30) Priority: 12.05.2021 JP 2021080731
(71) Applicant: Hitachi, Ltd., Tokyo 100-8280 (JP)
(72) Inventor: AGATSUMA, Shotaro, Tokyo 100-8280 (JP); TERUYA, Eri, Tokyo 100-8280 (JP); TAKEUCHI, Tadashi, Tokyo 100-8280 (JP)
(74) Representative: MERH-IP Matias Erny Reichl Hoffmann Patentanwälte PartG mbB
(86) International application number: PCT/JP2022/018863
(87) International publication number: WO 2022/239640

(57) **Abstract**

Synonyms are efficiently extracted from document data with high accuracy. A synonym determination system acquires correct/incorrect information that is information indicating whether or not two constituent words of a part of a plurality of synonym candidates that are a combination of two words selected from a plurality of words extracted from document data are synonyms, generates a synonym extraction rule that is information for determining whether or not the two constituent words of the synonym candidates are synonyms on the basis of a feature of the synonym candidates acquired from the document data and the correct/incorrect information, and extracts the synonym candidates of which the two constituent words are synonyms by applying the synonym extraction rule to the synonym candidates for which the correct/incorrect information has not been acquired. The correct/incorrect information is acquired, for example, by being received from a user via a user interface.

## Description

### Technical Field

The present invention relates to a synonym determination system and a synonym determination method.

### Background Art

The present application claims priority to Japanese Patent Application No. 2021-080731 filed on May 12, 2021, the entire disclosure of which is hereby incorporated herein by reference.

PTL 1 discloses a system for calculating a numerical expression of a word. The system learns a plurality of classifiers and an embedding function by using learning data including a sequence of words. The classifiers generate a word score by processing the numerical expression of an input word. The embedding function receives the input word and maps the input word to a numerical expression in a high-dimensional space according to embedding function parameters. The system processes each word in a vocabulary list of words by using an embedding function layer, acquires the numerical expressions of the words in the vocabulary in the high-dimensional space, and associates each word in the vocabulary with a word in the high-dimensional space.

PTL 2 discloses a notation distortion detection device configured to accurately detect a notation distortion candidate. The notation distortion detection device extracts terms from document data, calculates a degree of similarity of any pair of the extracted terms, determines whether the pair of terms is a notation distortion candidate on the basis of the calculated degree of similarity, and groups notation distortion candidates on the basis of a shared character string included in the pairs of terms that are the notation distortion candidates.

### Citation List

### Patent Literature

PTL 1: US 9,037,464 B1
PTL 2: JP 2012-256197 A

### SUMMARY OF INVENTION

### Technical Problem

For example, a product maintenance department in a company or the like may search for a document related to a corresponding failure (hereinafter, referred to as a "product maintenance document") from document data accumulated in advance in order to identify the cause of a product failure. In such a search, search efficiency and search accuracy can be improved by enabling simultaneous searches not only for a search term designated by a user but also for synonyms of the search term.

In order to perform simultaneous searches using synonyms as described above, it is necessary to extract synonyms from the document data to be searched in advance. However, since it takes many man-hours to manually extract synonyms from large volumes of document data, a mechanism for efficiently extracting synonyms from document data is required.

Here, in PTL 1, an input word is mapped to a numerical expression in a high-dimensional space by using a classifier and an embedding function trained with learning data including a sequence of words, a numerical expression of each word in a vocabulary in the high-dimensional space is acquired, and each word of the vocabulary is associated with a word in the high-dimensional space. However, in order to perform highly accurate synonym determination by using the same technology, it is necessary to prepare an enormous amount of learning data. For example, in a case where synonyms are extracted from document data specialized in a specific technology such as a product maintenance document, sufficient learning data cannot be secured, and it is difficult to improve extraction accuracy.

In PTL 2, the degree of similarity of any pair of terms extracted from document data is calculated, and notation distortion candidates are grouped on the basis of a shared character string included in the pairs of terms that are notation distortion candidates according to the calculated degree of similarity. However, in the technique disclosed in PTL 1, it is necessary to manually adjust a rule for each type of document. For example, in a case where a target document is a product maintenance document, words used in the document are different for each target product. Therefore, it is necessary to set a rule for each target product, imposing a heavy human burden.

The present invention has been conceived in view of such a background, and an object thereof is to provide a synonym determination system and a synonym determination method capable of efficiently extracting synonyms from document data with high accuracy.

### Solution to the Problem

According to one aspect of the present invention for achieving the above object, there is provided a synonym determination system including an information processing apparatus including a processor and a memory, in which correct/incorrect information that is information indicating whether or not two constituent words of a part of a plurality of synonym candidates that are a combination of two words selected from a plurality of words extracted from document data are synonyms is acquired, a synonym extraction rule that is information for determining whether or not the two constituent words of the synonym candidates are synonyms is generated on the basis of a feature of the synonym candidates acquired from the document data and the correct/incorrect information, and the synonym candidates of which the two constituent words are synonyms are extracted by applying the synonym extraction rule to the synonym candidates for which the correct/incorrect information has not been acquired.

In addition, the problem disclosed in the present application and the method for solving the problem will be clarified by the following description of embodiments for carrying out the invention and the accompanying drawings.

### Advantageous Effects of the Invention

According to the present invention, it is possible to efficiently extract synonyms from document data with high accuracy.

### BRIEF DESCRIPTION OF THE DRAWINGS

FIG. 1 is a diagram illustrating a schematic configuration of a synonym determination system.
FIG. 2 is an example of an information processing apparatus used for a configuration of the synonym determination system.
FIG. 3 is a system flow diagram for describing a basic operation of the synonym determination system.
FIG. 4 illustrates an example of a document information table.
FIG. 5 illustrates an example of a word category list.
FIG. 6 illustrates an example of a word table.
FIG. 7 illustrates an example of a synonym candidate table.
FIG. 8 illustrates an example of a mismatch substring table.
FIG. 9 illustrates an example of a threshold table.
FIG. 10 illustrates an example of a substring correct/incorrect table.
FIG. 11 illustrates an example of a synonym dictionary.
FIG. 12 illustrates an example of a non-synonym dictionary.
FIG. 13 is a flowchart for describing a synonym determination process.
FIG. 14 is a flowchart for describing a word extraction process.
FIG. 15 is a flowchart illustrating a synonym candidate generation process.
FIG. 16 is a flowchart illustrating a synonym extraction rule applying process.
FIG. 17 is a flowchart for describing a mismatch substring specifying process.
FIG. 18 is a flowchart illustrating a synonym candidate correct/incorrect determination process.
FIG. 19 illustrates an example of a correct/incorrect determination input screen.
FIG. 20 is a flowchart for describing a synonym extraction rule generation process.
FIG. 21 is a flowchart for describing a threshold determination process.
FIG. 22 illustrates an example of a feature-correct/incorrect number distribution.
FIG. 23 is a flowchart for describing a substring correct/incorrect table generation process.
FIG. 24 illustrates an example of a re-presentation necessity check dialog.

### DETAILED DESCRIPTION

Hereinafter, embodiments of the invention will be described with reference to the drawings. The following description and drawings are examples for describing the present invention, and include omissions and simplifications as appropriate for the sake of clarity of description. The present invention can be implemented in various other forms. Each constituent may be singular or plural unless otherwise specified.

In the following description, the same or similar configurations are denoted by the same reference numerals, and redundant description may be omitted. In the following description, the letter "S" added before a reference numeral indicates a processing step. In the following description, various types of information may be described with expressions such as "table" and "information", but the information may be expressed with data structures other than these.

In the following description, a combination of two words will be referred to as a "word pair" . In the following description, one or more sentences or a collection of one or more sentences described for a predetermined topic will be referred to as a document, and various processes described below will be described as being performed in units of documents in principle, but the unit of processing is not necessarily limited.

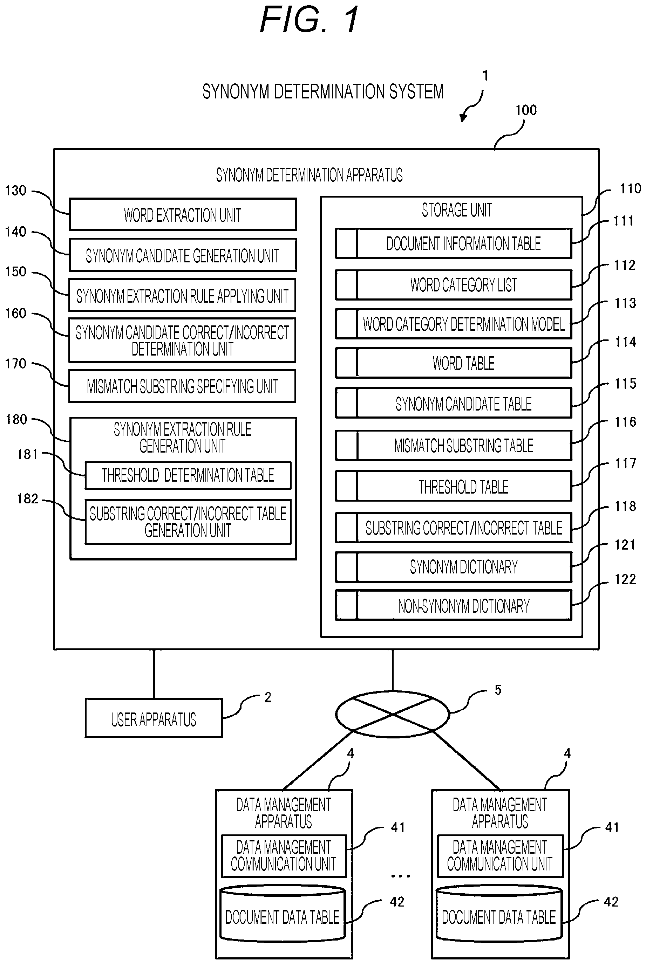

FIG. 1 illustrates a schematic configuration of an information processing system (hereinafter, referred to as a "synonym determination system 1") described as an embodiment of the present invention. As illustrated in FIG. 1, the synonym determination system 1 includes a synonym determination apparatus 100, a user apparatus 2, and a data management apparatus 4. These are all configured by using information processing apparatuses (computers), and are connected to each other via a communication medium 5 in a state in which bidirectional communication can be performed. The communication medium 5 is a communication infrastructure that provides a wired or wireless communication function, and is, for example, various communication networks such as a local area network (LAN), a wide area network (WAN), the Internet, a dedicated line, and various public communication networks, various communication devices conforming to a Universal Serial Bus (USB) standard, and the like.

The synonym determination apparatus 100 determines whether two words in a word pair extracted from document data are synonyms or not, registers a word pair determined to be synonyms in a synonym dictionary, and registers a word pair determined to be not synonyms in a non-synonym dictionary. The document data that is an extraction source of the word pair is, for example, data obtained by digitizing a product maintenance document or the like in which operational technology (OT) knowledge is described. The synonym dictionary generated by the synonym determination apparatus 100 is used, for example, in a service for efficiently searching for useful information from the OT knowledge and providing the information to a user.

As illustrated in FIG. 1, the synonym determination apparatus 100 includes, as main functions, a storage unit 110, a word extraction unit 130, a synonym candidate generation unit 140, a synonym extraction rule applying unit 150, a synonym candidate correct/incorrect determination unit 160, a mismatch substring specifying unit 170, and a synonym extraction rule generation unit 180. The synonym extraction rule generation unit 180 includes a threshold determination unit 181 and a substring correct/incorrect table generation unit 182.

The storage unit 110 stores, as main information (data), a document information table 111, a word category list 112, a word category determination model 113, a word table 114, a synonym candidate table 115, a mismatch substring table 116, a threshold table 117, a substring correct/incorrect table 118, a synonym dictionary 121, and a non-synonym dictionary 122. Details thereof will be described later.

The user apparatus 2 provides a user interface (a screen (image) display device, a voice input/output device, or the like) for managing various types of information referred to or updated by the synonym determination apparatus 100. The user apparatus 2 provides, for example, a user interface for a user to refer to or edit the synonym candidate table 115, the synonym dictionary 121, and the non-synonym dictionary 122. The user apparatus 2 receives, from the user via the user interface, information (hereinafter, referred to as "correct/incorrect information") indicating whether or not a word pair in the synonym candidate table 115 in which word pairs that are synonym candidates are managed is synonyms, and transmits the received correct/incorrect information to the synonym determination apparatus 100 via the communication medium 5.

The data management apparatus 4 includes a data management communication unit 41. The data management communication unit 41 manages document data that is an extraction source of a word pair in the document information table 42. The data management communication unit 41 communicates with the synonym determination apparatus 100, and appropriately provides (transmits) the document data to the synonym determination apparatus 100. The data management apparatus 4 acquires the document data managed in the document information table 42 via the communication medium 5, for example. The user may also register the document data via a user interface provided by the user apparatus 2.

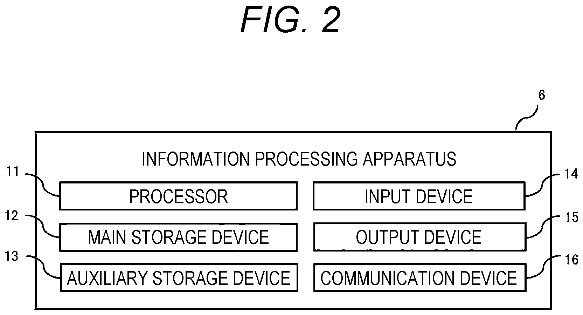

FIG. 2 illustrates an example of an information processing apparatus used for a configuration of the synonym determination system 1 (the synonym determination device 100, the user apparatus 2, the data management apparatus 4, and the like). An exemplified information processing apparatus 10 includes a processor 11, a main storage device 12, an auxiliary storage device 13, an input device 14, an output device 15, and a communication device 16. Examples of the information processing apparatus 10 include a personal computer, a server apparatus, a smartphone, and a tablet terminal.

The whole or a part of the information processing apparatus 10 may be realized by using a virtual information processing resource that is provided by using a virtualization technology, a process space separation technology, or the like, such as a virtual server provided by a cloud system. All or some of the functions provided by the information processing apparatus 10 may be realized by, for example, a service provided by a cloud system via an application programming interface (API) or the like. All or some of the functions provided by the information processing apparatus 10 may be realized by using, for example, Software as a Service (SaaS), Platform as a Service (PaaS), or Infrastructure as a Service (IaaS).

The synonym determination apparatus 100 and the user apparatus 2 may be implemented by the same information processing apparatus 10 (common hardware). The synonym determination apparatus 100 may be implemented by using, for example, a plurality of information processing apparatuses 10 communicatively connected to each other.

The processor 11 illustrated in FIG. 2 is configured by using, for example, a central processing unit (CPU), a micro processing unit (MPU), a graphics processing unit (GPU), a field programmable gate array (FPGA), an application specific integrated circuit (ASIC), or an artificial intelligence (AI) chip.

The main storage device 12 is a device that stores programs and data, and is, for example, a read only memory (ROM), a random access memory (RAM), or a non-volatile memory (non-volatile RAM (NVRAM)).

The auxiliary storage device 13 is, for example, a solid state drive (SSD), a hard disk drive, an optical storage device (a compact disc (CD), a digital versatile disc (DVD), or the like), a storage system, an IC card, a reading/writing device of a recording medium such as an SD card or an optical recording medium, or a storage area of a cloud server. The auxiliary storage device 13 can read programs and data via a reading device of a recording medium or the communication device 16. The programs and the data stored in the auxiliary storage device 13 are read into the main storage device 12 as needed.

The input device 14 is an interface that receives an input from the outside, and is, for example, a keyboard, a mouse, a touch panel, a card reader, a pen input type tablet device, or a voice input device.

The output device 15 is an interface that outputs various types of information such as a processing progress and a processing result. The output device 15 is, for example, a display device (a liquid crystal monitor, a liquid crystal display (LCD), graphic card, or the like) that visualizes the various types of information, a device (a voice output device (a speaker or the like)) that converts the various types of information into audio, or a device (a printing device or the like) that converts the various types of information into text. Note that, for example, the information processing apparatus 10 may be configured to input and output information to and from another apparatus via the communication device 16.

The input device 14 and the output device 15 configure a user interface that realizes interactive processing (reception of information, presentation of information, and the like) with a user.

The communication device 16 is a device that realizes communication with other devices. The communication device 16 is a wired or wireless communication interface that realizes communication with another device via the communication medium 5, and is, for example, a network interface card (NIC), a wireless communication module, or a USB module.

For example, an operating system, a file system, a database management system (DBMS) (a relational database, NoSQL, or the like), a key-value store (KVS), or the like may be introduced into the information processing apparatus 10.

The functions of the synonym determination apparatus 100, the user apparatus 2, and the data management apparatus 4 are realized by the respective processors 11 reading and executing programs stored in the main storage devices 12, or by hardware (an FPGA, an ASIC, an AI chip, or the like) configuring these apparatuses.

Various functions provided by the synonym determination apparatus 100 are realized by using, for example, various known data mining methods such as text data mining, various known natural language processing methods (morphological analysis, syntactic parsing, semantic analysis, context analysis, feature extraction, word distributed expression, named entity recognition, text classification, and sequence labeling), and various known machine learning methods (a deep neural network (DNN)), a recurrent neural network (RNN), and the like). The synonym determination apparatus 100 stores the above-described various types of information (data) as, for example, a table of a database or a file managed by a file system.

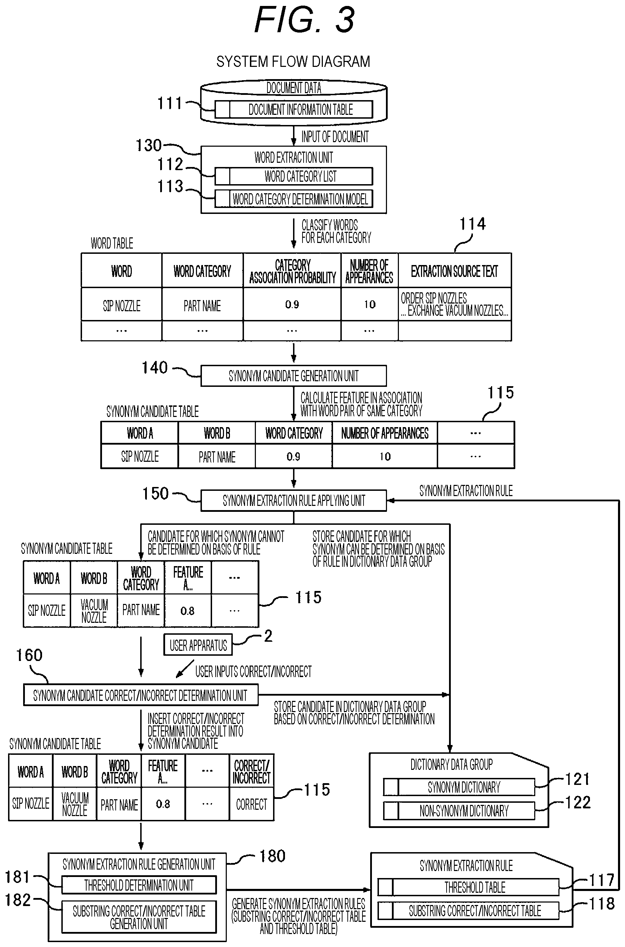

FIG. 3 is a system flow diagram illustrating a basic operation of the synonym determination system 1. Hereinafter, a basic operation of the synonym determination system 1 will be described with reference to FIG. 3 and FIG. 1. The synonym determination system 1 uses correct/incorrect information received from the user and synonym extraction rules (the threshold table 117 and the substring correct/incorrect table 118) generated by the synonym extraction rule generation unit 180, as a criterion for determining whether two words forming a word pair are synonyms or non-synonyms.

As illustrated in FIG. 3, the word extraction unit 130 of the synonym determination apparatus 100 extracts a word from the document information table 111 and specifies a category to which the extracted word belongs by using the word category determination model 113. The word extraction unit 130 extracts a word by applying a named entity recognition (NER) technology to the document information, for example. The word extraction unit 130 registers the extracted word, the category to which the word belongs, a probability that the word belongs to the specified category (hereinafter, referred to as a "category association probability"), and a sentence (text data) that is an extraction source of the extracted word in the document information table in the word table 114.

The synonym candidate generation unit 140 obtains a feature (hereinafter, referred to as a "relationship feature") indicating a relationship between two words forming a word pair (hereinafter, also referred to as a "synonym candidate") that is a combination of two words having the same category and managed in the word table 114 for the word pair, and stores the word pair and the relationship feature of the word pair in association with each other in the synonym candidate table 115. The synonym candidate generation unit 140 uses, as the relationship feature, for example, a co-occurrence frequency of the word pair acquired by applying a machine learning model (word2vec or the like) from the document data of the document information table 111, an editing distance of the word pair, a category association probability of the word pair, the number of appearances of the word pair, and a sentence (text data) of an extraction source of each word of the word pair. Note that the relationship feature is not necessarily limited thereto. The content of the synonym candidate table 115 may be set by a user via a user interface provided by the user apparatus 2.

The synonym extraction rule applying unit 150 determines whether the two words forming the word pair in the synonym candidate table 115 are synonyms or not. The synonym extraction rule generation unit 180 performs the above determination by using synonym extraction rules (the threshold table 117 and the substring correct/incorrect table 118). Specifically, the synonym extraction rule applying unit 150 first specifies, for a word pair in the synonym candidate table 115, a combination (hereinafter, referred to as a "mismatch substring pair") of character strings (hereinafter, referred to as "mismatch substrings") in a portion where the words do not match. Specifically, the synonym extraction rule applying unit 150 instructs the mismatch substring specifying unit 170 to perform the above specifying operation. Subsequently, the synonym extraction rule applying unit 150 refers to the substring correct/incorrect table 118, checks whether the specified mismatch substring pair is correct or incorrect (whether the mismatch substring pair has a synonym relationship or a non-synonym relationship), registers the word pair in the synonym dictionary 121 in a case where it is determined that the mismatch substring pair is correct (it is determined that the mismatch substring pair is synonyms), and registers the word pair in the non-synonym dictionary 122 in a case where it is determined that the mismatch substring pair is incorrect (it is determined that the mismatch substring pair is non-synonyms). The synonym extraction rule applying unit 150 compares a relationship feature of the word pair with a threshold in the corresponding threshold table 117 for each of the word pairs in the synonym candidate table 115, and registers the word pair in the non-synonym dictionary 122 in a case where there is a relationship feature less than a value in the threshold table. Note that, in this example, in a case where there is even one relationship feature less than a value in the threshold table as described above, a word pair is registered in the non-synonym dictionary 122, but a condition for determination as to whether or not the word pair is a non-synonym is not necessarily limited.

The synonym candidate correct/incorrect determination unit 160 acquires information (hereinafter, referred to as "correct/incorrect information") indicating whether two words forming a word pair in the synonym candidate table 115 are synonyms or a non-synonym relationship, registers the word pair in the synonym dictionary 121 in a case where the two words are synonyms, and registers the word pair in the non-synonym dictionary 122 in a case where the two words have the non-synonym relationship. In the present embodiment, correct/incorrect information of the word pair is received from the user while presenting the synonym candidate table 115 to the user apparatus 2. Note that a method of acquiring correct/incorrect information is not necessarily limited. For example, correct/incorrect information generated by another information processing system may be used. The synonym candidate correct/incorrect determination unit 160 updates correct/incorrect information managed in the synonym candidate table 115 corresponding to the word pair on the basis of the correct/incorrect information of the word pair.

The mismatch substring specifying unit 170 specifies a mismatch substring pair and registers the specified mismatch substring pair in the mismatch substring table 116. For example, in a case where respective words of the word pair are an "SIP nozzle" and a "vacuum nozzle", the mismatch substring specifying unit 170 specifies "SIP" and "vacuum" as a mismatch substring pair, and registers the specified mismatch substring pair in the mismatch substring table 1167.

The synonym extraction rule generation unit 180 generates synonym extraction rules (the threshold table 117 and the substring correct/incorrect table 118) on the basis of the relationship feature and the correct/incorrect information of each word pair managed in the synonym candidate table 115. Specifically, the threshold determination unit 181 of the synonym extraction rule generation unit 180 obtains a relationship between a value of the relationship feature and a correct/incorrect number (hereinafter, referred to as "feature-correct/incorrect number distribution") for each category, and determines a threshold to be set for the relationship feature on the basis of the feature-correct/incorrect number distribution. The threshold determination unit 181 registers the determined threshold in the threshold table 117.

The substring correct/incorrect table generation unit 182 instructs the mismatch substring specifying unit 170 to specify a mismatch substring pair for a word pair in the synonym candidate table 115, and registers a record in which the specified mismatch substring pair is associated with correct/incorrect information of the word pair in the substring correct/incorrect table 118.

Next, main information (data) managed by the storage unit 110 will be specifically described.

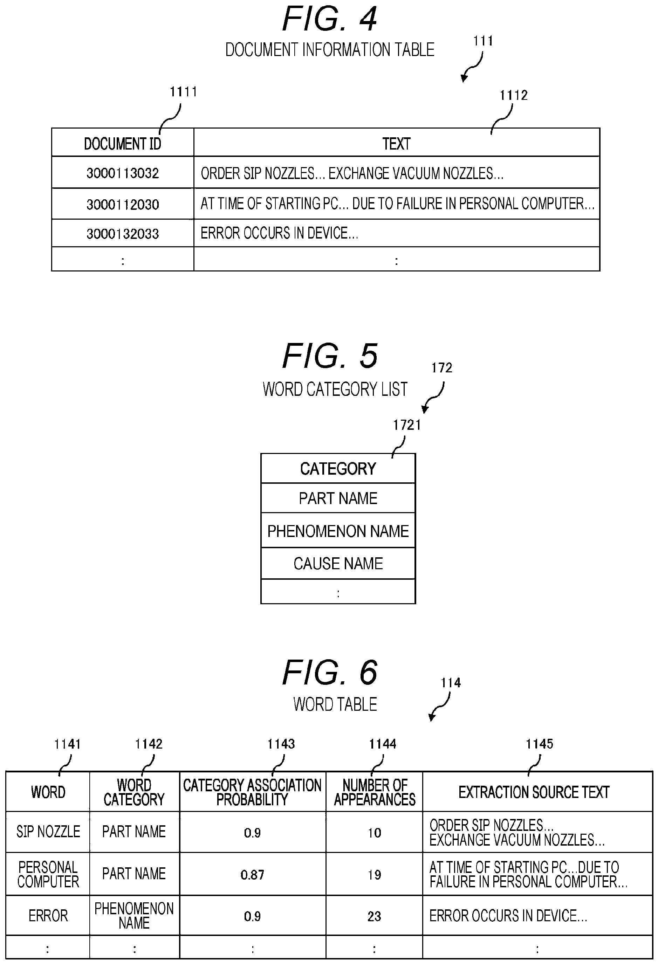

FIG. 4 illustrates an example of the document information table 111 managed by the storage unit 110 illustrated in FIG. 1. In the document information table 111, document data (for example, data in which text data or content of a document is described in a predetermined data format) that is an extraction source of a word pair is managed. The exemplified document information table 111 includes one or more records having respective items such as a document ID 1111 and text 1112.

Among the above items, an identifier (hereinafter, the document ID is referred to as a "document ID") of document data is stored in the document ID 1111. The entity of the document data is stored in the text 1112. Note that only a location of the document data may be stored in the text 1112, and the entity of the document data may be managed in a storage region (for example, a storage device or the like communicatively connected to the synonym determination apparatus 100) specified by the location.

FIG. 5 illustrates an example of the word category list 112 managed by the storage unit 110. In the word category list 112, a list of categories that are word classification destinations is managed. The exemplified word category list 112 has a category 1121 which is an item in which a list of categories is stored. The content of the word category list 172 is set by a user via a user interface provided by the user apparatus 2, for example.

The word category determination model 113 managed by the storage unit 110 illustrated in FIG. 1 is a model for determining which category of the word category list 112 a word to be extracted from the document information table 111 belongs to. The word category determination model 113 obtains a probability (hereinafter, referred to as a "category association probability") that the input word belongs to each category in the word category list 112, determines a category having the largest obtained category association probability as a category to which the word belongs, and outputs the determined word and the category association probability of the word. The word category determination model 113 is represented by, for example, a determinant or a mathematical expression. The word category determination model 113 is realized by using, for example, various known natural language processing methods (morphological analysis, syntactic parsing, semantic analysis, context analysis, feature extraction, word distributed expression, named entity recognition, text classification, and sequence labeling), and various known machine learning methods (a deep neural network (DNN)), a recurrent neural network (RNN), and the like). However, a method of realizing the word category determination model 113 is not necessarily limited.

FIG. 6 illustrates an example of the word table 114 managed by the storage unit 110 illustrated in FIG. 1. As illustrated in FIG. 6, the word table 114 includes a plurality of records each having respective items such as a word 1141, a word category 1142, a category association probability 1143, the number of appearances 1144, and extraction source text 1145. One record of the word table 114 corresponds to one word.

Among the above items, text data of a word extracted by the word extraction unit 130 from the text 1112 of the document information table 111 is stored in the word 1141. A category to which the word belongs determined by the word category determination model 113 is stored in the word category 1142. A category association probability of the word obtained by the word category determination model 113 is stored in the category association probability 1143. The number of appearances of the word in the document data that is an extraction source is stored in the number of appearances 1144. Text data which is document data that is an extraction source of the word is stored in the extraction source text 1145.

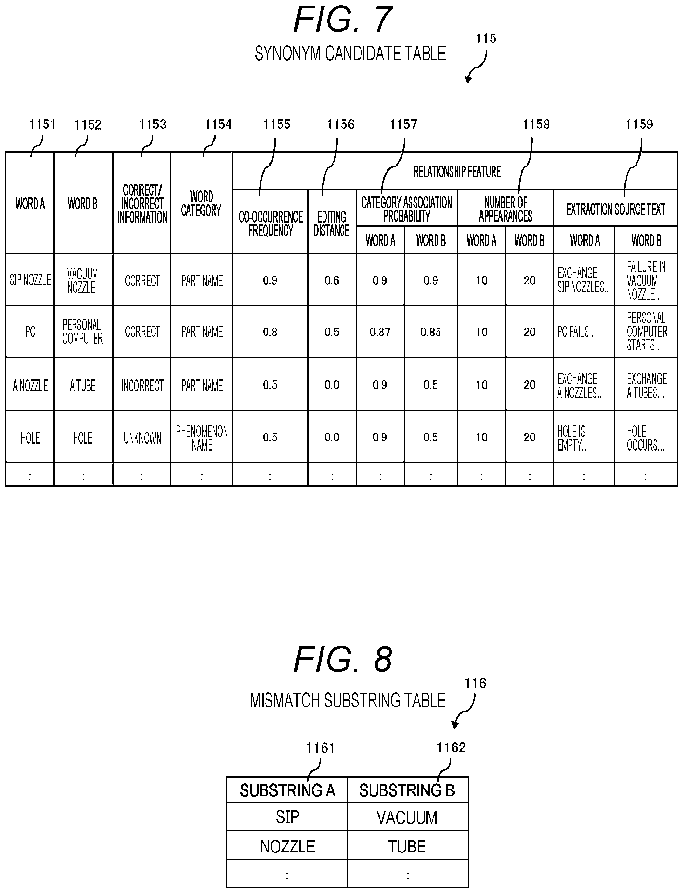

FIG. 7 illustrates an example of the synonym candidate table 115 managed by the storage unit 110 illustrated in FIG. 1. Information regarding a word pair that is synonym candidates is managed in the synonym candidate table 115. The word pair is a combination of two words belonging to the same category extracted from words in the word table 114. As illustrated in FIG. 7, the exemplified synonym candidate table 115 includes a plurality of records each having respective items such as a word A 1151, a word B 1152, correct/incorrect information 1153, a word category 1154, a co-occurrence frequency 1155, an editing distance 1156, a category association probability 1157, the number of appearances 1158, and an extraction source text 1159.

Among the above items, elements (hereinafter, referred to as a "word A" and a "word B") of a word pair serving as synonym candidates are respectively stored in the word A 1151 and the word B 1152. A category to which the word A and the word B acquired from the word table 114 belong is stored in the word category 1154. In this example, it is assumed that the word B is a synonym candidate of the word A.

Information (correct/incorrect information) indicating whether or not two words (the word A and the word B) forming the word pair are synonyms is stored in the correct/incorrect information 1153. The content of the correct/incorrect information 1153 is received from a user via a user interface provided by the user apparatus 2. In a case where the correct/incorrect information has not been acquired, information (for example, "unknown") indicating the fact is stored in the correct/incorrect information 1153.

Specific values of relationship features (a co-occurrence frequency, an editing distance, a category association probability, the number of appearances, extraction source text) are stored in the co-occurrence frequency 1155, the editing distance 1156, the category association probability 1157, the number of appearances 1158, and the extraction source text 1159. A co-occurrence frequency of the word A and the word B calculated by using a machine learning model or the like is stored in the co-occurrence frequency 1155. A value obtained by normalizing an editing distance of the word pair by using a sum of lengths of the word A and the word B is stored in the editing distance 1156. A category association probability of each of the word A and the word B acquired from the word table 114 is stored in the category association probability 1157. The number of appearances of each of the word A and the word B acquired from the word table 114 is stored in the number of appearances 1158. Document data (text data) that is an extraction source of each of the word A and the word B acquired from the word table 114 is stored in the extraction source text 1159.

FIG. 8 illustrates an example of the mismatch substring table 116 managed by the storage unit 110 illustrated in FIG. 1. The mismatch substring table 116 stores a mismatch substring pair (text data of a mismatch substring of each of the word A and the word B forming the word pair). As illustrated in FIG. 8, the exemplified mismatch substring table 116 includes a plurality of records each having respective items such as a substring A 1161 and a substring B 1162. One record in the mismatch substring table 116 corresponds to one word pair.

Among the above items, substrings (mismatch substrings) of respective words remaining by deleting match substrings (hereinafter, referred to as "match substrings") between the two words forming the word pair, specified by the mismatch substring specifying unit 170 are stored in the substring A 1161 and the substring B 1162. In the example in FIG. 8, for example, for a word pair including the word A "SIP nozzle" and the word B "vacuum nozzle", mismatch substrings "SIP" and "vacuum" remaining by deleting the match substring "nozzle" from each word are stored in the substring A 1161 and the substring B 1162, respectively.

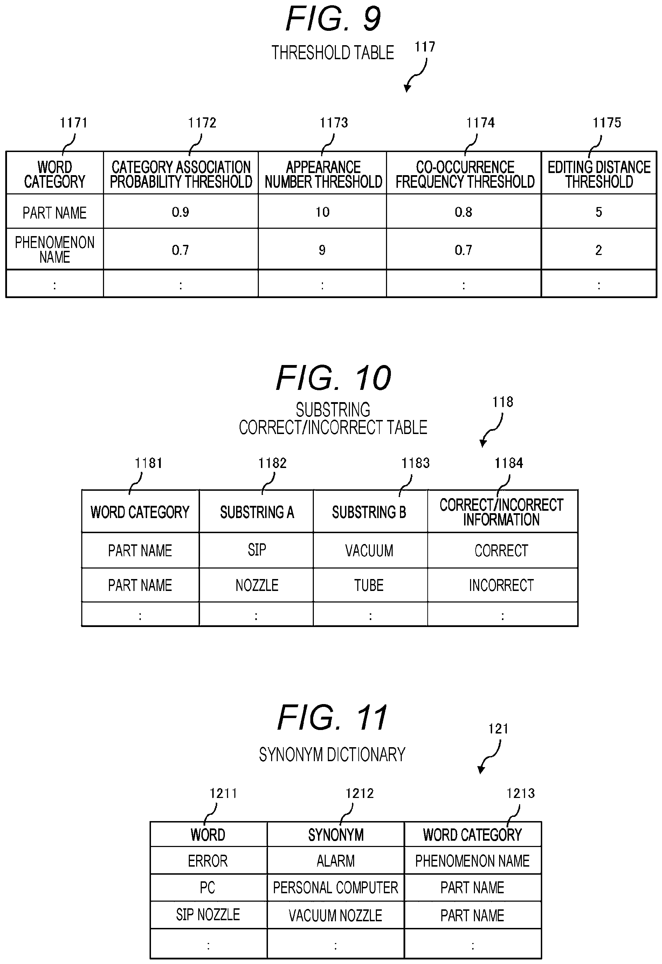

FIG. 9 illustrates an example of the threshold table 117 managed by the storage unit 110 illustrated in FIG. 1. A threshold of a relationship feature for each category, determined by the threshold determination unit 181, is stored in the threshold table 117. As illustrated in FIG. 9, the exemplified threshold table 117 includes a plurality of records each having respective items such as a word category 1171, a category association probability threshold 1172, an appearance number threshold 1173, a co-occurrence frequency threshold 1174, and an editing distance threshold 1175. One record in the threshold table 117 corresponds to one category.

Among the above items, one of the categories in the word category list 112 is stored in the word category 1171. Thresholds of relationship features (a category association probability threshold, a threshold of the number of appearances of a word, a threshold of a co-occurrence frequency, and a threshold of an editing distance between words) set for the category are respectively stored in the category association probability threshold 1172, the appearance number threshold 1173, the co-occurrence frequency threshold 1174, and the editing distance threshold 1175.

FIG. 10 illustrates an example of the substring correct/incorrect table 118 managed by the storage unit 110 illustrated in FIG. 1. A result of determination as to whether there is a similarity between the respective substrings (the substring A 1161 and the substring B 1162) of the mismatch substring pair in the mismatch substring table 116 is stored in the substring correct/incorrect table 118. As illustrated in FIG. 10, the substring correct/incorrect table 118 includes a plurality of records each having respective items such as a word category 1181, a substring A 1182, a substring B 1183, and correct/incorrect information 1184. One record in the substring correct/incorrect table 118 corresponds to one mismatch substring pair.

Among the above items, a category to which a word that is an extraction source of each of substrings forming the mismatch substring pair belongs is stored in the word category 1181. The respective substrings forming a combination of the substrings are stored in the substring A 1182 and the substring B 1183. A result (correct/incorrect information) of determination as to whether or not the mismatch substring pair has a similarity is stored in the correct/incorrect information 1184.

FIG. 11 illustrates an example of the synonym dictionary 121 managed by the storage unit 110 illustrated in FIG. 1. As illustrated in FIG. 11, the synonym dictionary 121 includes a plurality of records each having respective items such as a word 1211, a synonym 1212, and a word category 1213. One record in the synonym dictionary 121 corresponds to one word pair (a combination of a certain word and a synonym of the word).

Among the above items, one of the words in the word table 114 is stored in the word 1211. A synonym of the word is stored in the synonym 1212. A category to which the word and the synonyms belong is stored in the word category 1213.

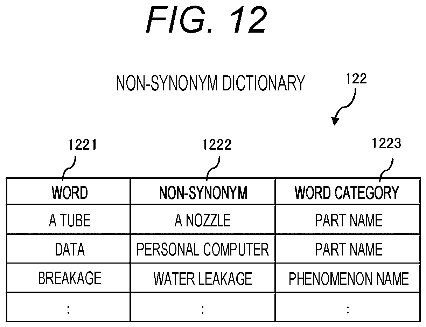

FIG. 12 illustrates an example of the non-synonym dictionary 122 managed by the storage unit 110 illustrated in FIG. 1. As illustrated in FIG. 12, the non-synonym dictionary 122 includes a plurality of records each having respective items such as a word 1221, a non-synonym 1222, and a word category 1223. One record in the non-synonym dictionary 122 corresponds to one word pair (a combination of a certain word and a non-synonym of the word).

Among the above items, a certain word in the word table 114 is stored in the word 1221. A non-synonym of the word is stored in the non-synonym 1222. A category to which the word and the non-synonym belong is stored in the word category 1223.

A user can refer to and edit the content of the synonym dictionary 121 and the non-synonym dictionary 122 via the user interface provided by the synonym determination system 1.

Next, processes performed in the synonym determination system 1 will be described.

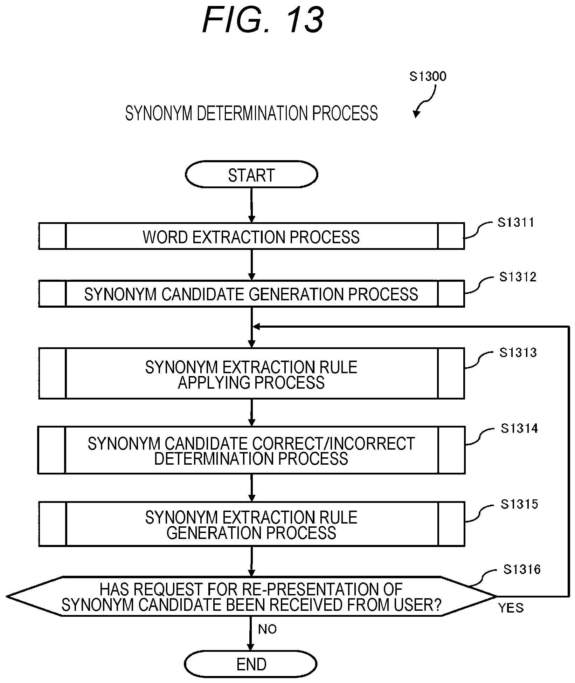

FIG. 13 is a flowchart for describing a process (hereinafter, referred to as a "synonym determination process S1300") in which the synonym determination system 1 generates the synonym dictionary 121 and the non-synonym dictionary 122 on the basis of the document data managed in the document information table 111. Hereinafter, the synonym determination process S1300 will be described with reference to the drawing. The synonym determination process S1300 is started when, for example, there is an explicit instruction from a user via the user apparatus 2 or a timing scheduled in advance arrives.

As illustrated in FIG. 13, first, the word extraction unit 130 performs a process (hereinafter, referred to as a "word extraction process S1311") of extracting a word from the document data managed in the document information table 111 and registering the extracted word in the word table 114. Details of the word extraction process S1311 will be described later.

Subsequently, the synonym candidate generation unit 140 performs a process (hereinafter, referred to as a "synonym candidate generation process S1312") of obtaining features for a combination of two words (word pair) belonging to the same category in the word table 114 and registering the word pair and the obtained features in the synonym candidate table 115. Details of the synonym candidate generation process S1312 will be described later.

Subsequently, the synonym extraction rule applying unit 150 uses the synonym extraction rules (the threshold table 117 and the substring correct/incorrect table 118) to determine whether the two words forming the word pair in the synonym candidate table 115 are synonyms or not, and performs a process (hereinafter, referred to as a "synonym extraction rule applying process S1313") of registering the word pair in the synonym dictionary 121 or the non-synonym dictionary 122 according to a result of the determination. Details of the synonym extraction rule applying process S1313 will be described later.

Subsequently, the synonym candidate correct/incorrect determination unit 160 performs a process (hereinafter, referred to as a "synonym candidate correct/incorrect determination process S1314") of acquiring correct/incorrect information (information indicating whether the word pair is synonyms or non-synonyms) from the user for the word pair in the synonym candidate table 115. Details of the synonym candidate correct/incorrect determination process S1314 will be described later.

Subsequently, the synonym extraction rule generation unit 180 performs a process (hereinafter, referred to as a "synonym extraction rule generation process S1315") of generating synonym extraction rules (the threshold table 117 and the substring correct/incorrect table 118) on the basis of the correct/incorrect information of the word pair in the synonym candidate table 115. Details of the synonym extraction rule generation process S1315 will be described later.

The process in subsequent S1316 will be described later. Note that, among the above processes, the processes in S1311 and S1312 may be executed, for example, at timings independent of S1313 to S1316. For example, the processes in S1311 to S1312 may be executed when the document information table 111 is updated, and the processes in S1313 to S1316 may be executed when, for example, a synonym extraction request (a request for creating the synonym dictionary 121) is received from the user via the user apparatus 2.

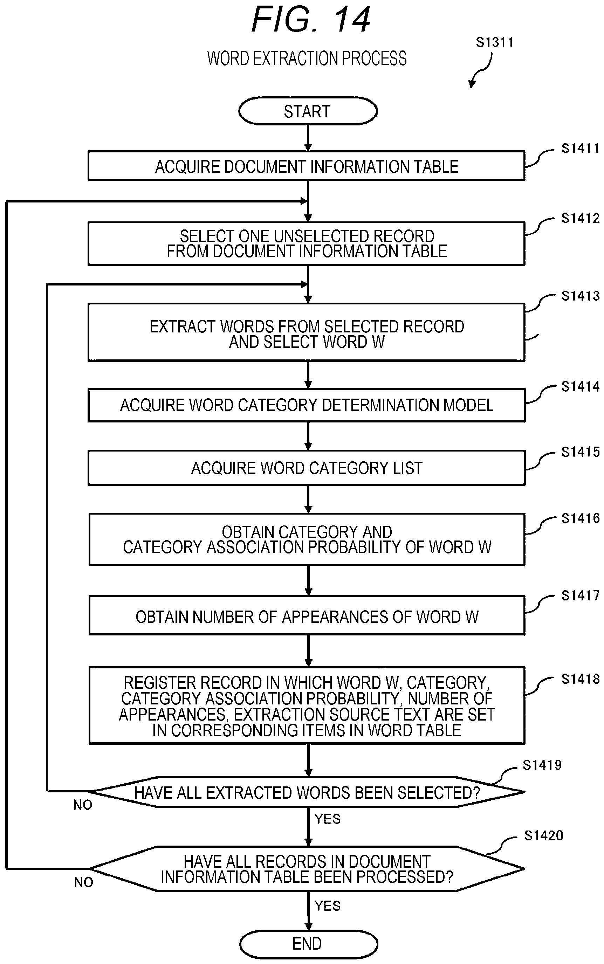

FIG. 14 is a flowchart for describing details of the word extraction process S1311 illustrated in FIG. 13. Hereinafter, the word extraction process S1311 will be described with reference to FIG. 14.

First, the word extraction unit 130 acquires the document information table 111 (S1411).

Subsequently, the word extraction unit 130 selects one record in the document information table 111 (S1412).

Subsequently, the word extraction unit 130 extracts a word from the text data stored in the text 1112 of the selected record. Note that the word extraction unit 130 extracts a word, for example, by performing morphological analysis on the text data. Then, the word extraction unit 130 selects one of the extracted words (hereinafter, referred to as a "word W") (S1413).

Subsequently, the word extraction unit 130 acquires the word category determination model 113 (S1414).

Subsequently, the word extraction unit 130 acquires the word category list 112 (S1415).

Subsequently, the word extraction unit 130 calculates a category to which the word W belongs and a category association probability of the word W for the category by using the word category determination model 113 and the word category list 112 (S1416).

Subsequently, the word extraction unit 130 obtains the number of appearances of the word W in the text data stored in the text 1112 of the selected record in the document information table 111 (S1417).

Subsequently, the word extraction unit 130 generates a record in which the word W, the category and the category association probability obtained in S1416, the number of appearances obtained in S1417, and the text data stored in the text 1112 in the document information table 111 that is an extraction source of the word W are set in corresponding items (the word 1141, the word category 1142, the category association probability 1143, the number of appearances 1144, and the extraction source text 1145), and registers the generated record in the word table 114 (S1418).

Subsequently, the word extraction unit 130 determines whether or not all the words extracted from the text data stored in the extraction source text 1145 of the selected record in S1413 have been selected as the words W (S1419). In a case where all the words have not been selected (S1419: NO), the process returns to S1412, and an unselected word is selected as the word W, and the similar processes (processes in S1414 to S1418) are performed. On the other hand, in a case where all the extracted words have been selected as the words W (S1419: YES), the process proceeds to S1420.

In S1420, the word extraction unit 130 determines whether or not all records in the document information table 111 have been selected in S1412. In a case where all the records have not been selected (S1420: NO), the process returns to S1412, and an unselected record is selected and processes similar to the above processes in S1413 to S1418 are performed. On the other hand, in a case where all the words have been selected (S1420: YES), the word extraction process S1311 is ended, and the process proceeds to the next step (synonym candidate generation process S1312) of the synonym determination process S1300.

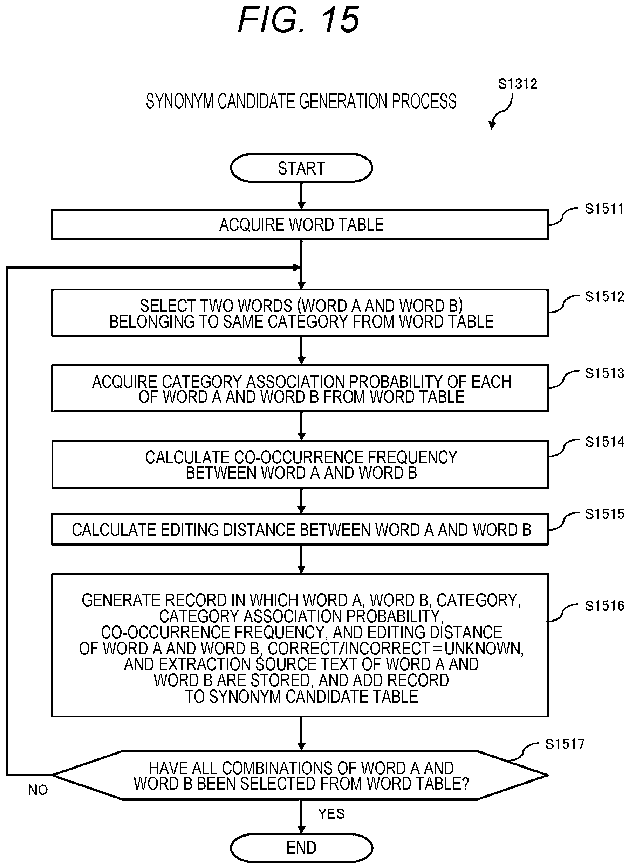

FIG. 15 is a flowchart for describing details of the synonym candidate generation process S1312 illustrated in FIG. 13. Hereinafter, the synonym candidate generation process S1312 will be described with reference to FIG. 15.

First, the synonym candidate generation unit 140 acquires the word table 114 (S1511).

Subsequently, the synonym candidate generation unit 140 selects two words (the word A and the word B) belonging to the same category from the word table 114 (S1512).

Subsequently, the synonym candidate generation unit 140 acquires a category association probability of each of the selected word A and word B from the word table 114 (S1513).

Subsequently, the synonym candidate generation unit 140 obtains a co-occurrence frequency (degree of similarity) of the word A and the word B on the basis of the document information table 111 (S1514). Note that a method of calculating a co-occurrence frequency is not necessarily limited, and for example, the co-occurrence frequency is obtained by using various known machine learning methods (a deep learning (deep neural network (DNN), a recurrent neural network (RNN), and the like).

Subsequently, the synonym candidate generation unit 140 obtains an editing distance between the word A and the word B. For example, the synonym candidate generation unit 140 normalizes the editing distance by using a sum of lengths of the word A and the word B (S1515).

Subsequently, the synonym candidate generation unit 140 generates a record in which the word A, the word B, the correct/incorrect information (= "unknown "), the category to which each of the word A and the word B belongs, the co-occurrence frequency obtained in S1514, the editing distance obtained in S1515, the category association probability of each of the word A and the word B, the number of appearances of each of the word A and the word B acquired from the word table 114, and the sentence (text data) that is an extraction source of each of the word A and the word B are stored in corresponding items (the word A 1151, the word B 1152, the correct/incorrect information 1153, the word category 1154, the co-occurrence frequency 1155, the editing distance 1156, the category association probability 1157, the number of appearances 1158, and the extraction source text 1159), and registers the record in the synonym candidate table 115 (S1516).

Subsequently, the synonym candidate generation unit 140 determines whether all combinations of two words have been selected from the word table 114 (S1517). In a case where all the combinations have not been selected (S1517: NO), the process returns to S1512, and the processes similar to the above processes are performed on an unselected combination. On the other hand, in a case where all the combinations have been selected (S1517: YES), the synonym candidate generation process S1312 is ended, and the process proceeds to the next step (synonym extraction rule applying process S1313) of the synonym determination process S1300.

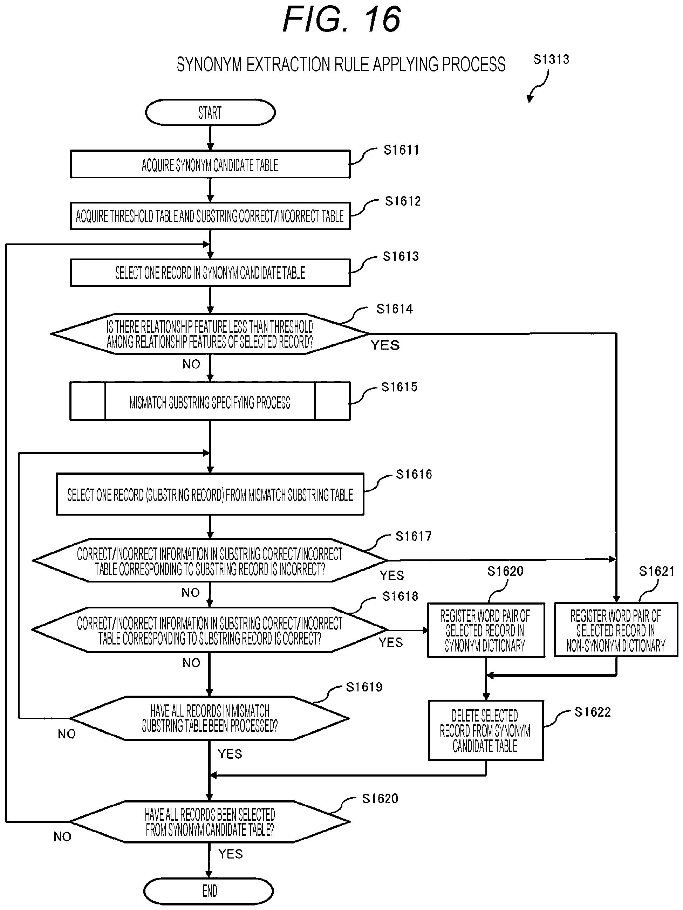

FIG. 16 is a flowchart for describing details of the synonym extraction rule applying process S1313 illustrated in FIG. 13. Hereinafter, the synonym extraction rule applying process S1313 will be described with reference to FIG. 16.

First, the synonym extraction rule applying unit 150 acquires the synonym candidate table 115 (S1611).

Subsequently, the synonym extraction rule applying unit 150 acquires synonym extraction rules (the threshold table 117 and the substring correct/incorrect table 118) (S1612).

Subsequently, the synonym extraction rule applying unit 150 selects one record from the synonym candidate table 115 (S1613).

Subsequently, the synonym extraction rule applying unit 150 compares a relationship feature in the selected record with a threshold in the threshold table 117, and determines whether there is a relationship feature less than the threshold (S1614). Specifically, the synonym extraction rule applying unit 150 determines whether there is a relationship feature less than a corresponding threshold in the threshold table 117 among the relationship features (the co-occurrence frequency 1155, the editing distance 1156, the category association probability of each of the word A and the word B in the category association probability 1157, and the number of appearances of each of the word A and the word B in the number of appearances 1158) in the record. In the above determination, the synonym extraction rule applying unit 150 uses a value stored in the category association probability threshold 1172 in the threshold table 117 of the common category to which the word A and the word B belong for the thresholds of the category association probabilities of the word A and the word B. In a case where there is even one relationship feature less than the threshold (S1614: YES), the synonym extraction rule applying unit 150 registers the word pair of the selected record in the non-synonym dictionary 122 (S1621), and deletes the selected record from the synonym candidate table 115 (S1622). Thereafter, the process proceeds to S1620. On the other hand, in a case where there is no relationship feature less than the threshold (S1621: NO), the process proceeds to S1615.

In step S1615, the synonym extraction rule applying unit 150 performs a process (hereinafter, referred to as a "mismatch substring specifying process S1615") of comparing the word A with the word B of the selected record to specify mismatch substrings and storing a combination of the specified mismatch substrings (mismatch substring pair) in the mismatch substring table 116. Details of the mismatch substring specifying process S1615 will be described later.

Subsequently, the synonym extraction rule applying unit 150 selects one record from the mismatch substring table 116 (S1616). Hereinafter, the record selected in S1616 will be referred to as a selected substring record.

Subsequently, the synonym extraction rule applying unit 150 acquires a value of the correct/incorrect information 1184 in the substring correct/incorrect table 118 corresponding to the mismatch substring pair of the selected substring record, and determines whether the acquired value is "incorrect" (S1617). In a case where the acquired value is "incorrect" (S1617: YES), the synonym extraction rule applying unit 150 registers the word pair of the record selected in S1613 in the non-synonym dictionary 122 (S1621), and deletes the selected record from the synonym candidate table 115 (S1622). Thereafter, the process proceeds to S1620. On the other hand, in a case where the acquired value is "correct" or in a case where the value is not set in the correct/incorrect information 1184 (S1617: NO), the process proceeds to S1618.

In S1618, the synonym extraction rule applying unit 150 determines whether or not the value acquired in S1617 is "correct". In a case where the acquired value is "correct" (S1618: YES), the synonym extraction rule applying unit 150 registers the word pair of the record selected in S1613 in the synonym dictionary (S1620), and deletes the selected record from the synonym candidate table 115 (S1622). Thereafter, the process proceeds to S1620. On the other hand, in a case where the acquired value is not "correct" (S1618: NO), the process proceeds to S1619.

In S1619, the synonym extraction rule applying unit 150 determines whether or not all records in the mismatch substring table 116 have been selected in S1616. In a case where all the records have not been selected (S1619: NO), the process returns to S1617, and an unselected record is selected and processes similar to the above processes are performed. On the other hand, in a case where all the records have been selected (S1619: YES), the process proceeds to S1620.

In S1620, the synonym extraction rule applying unit 150 determines whether or not all records have been selected from the synonym candidate table 115 in S1613. In a case where all the records have not been selected (S1620: NO), the process returns to S1613, and the next record is selected and processes similar to the above processes are performed. On the other hand, in a case where all the records have been selected (S1620: YES), the synonym extraction rule applying process S1313 is ended, and the process proceeds to the next step (synonym candidate correct/incorrect determination process S1314) of the synonym determination process S1300.

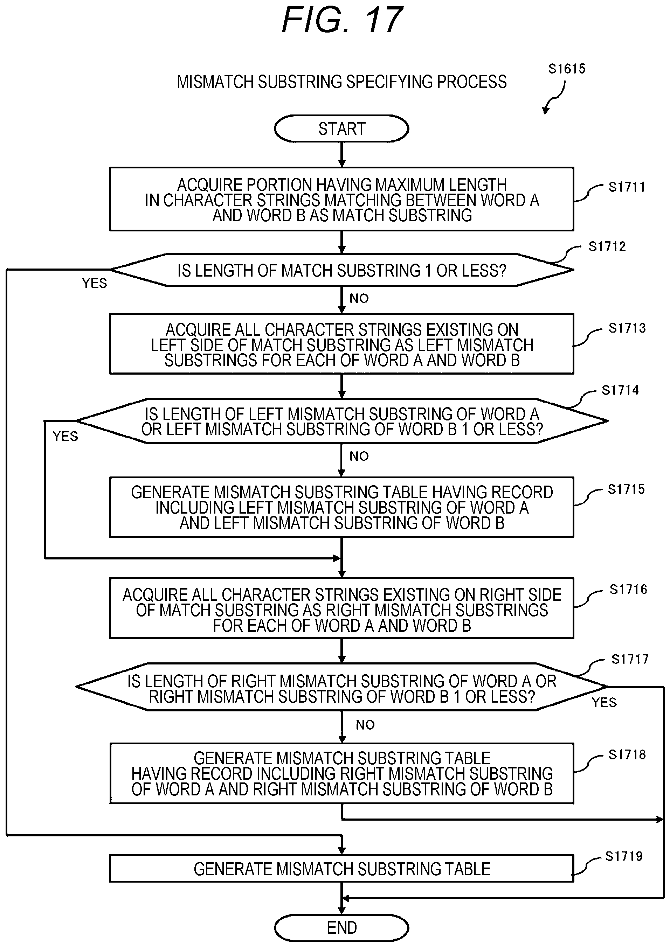

FIG. 17 is a flowchart for describing details of the mismatch substring specifying process S1615 illustrated in FIG. 16. Hereinafter, the mismatch substring specifying process S1615 will be described with reference to FIG. 17.

First, the synonym extraction rule applying unit 150 acquires a character string having the maximum length (hereinafter, referred to as a "match substring") among the character strings in which the word A and the word B match (S1711). For example, in a case where the word A is an "SIP nozzle" and the word B is a "vacuum nozzle", the synonym extraction rule applying unit 150 acquires the "nozzle" as a match substring.

Subsequently, the synonym extraction rule applying unit 150 determines whether the length of the match substring is 1 or less (S1712). In a case where the length of the match substrings is 1 or less (S1712: YES), the synonym extraction rule applying unit 150 generates an empty mismatch substring table 116 (no value is set), and ends the mismatch substring specifying process S1615 (S1719).

On the other hand, in a case where the length of the match substrings is more than 1 (S1712: NO), the synonym extraction rule applying unit 150 acquires all the character strings existing on the left side of the match substrings for the word A and the word B as left mismatch substrings of the word A and the word B (S1713). For example, in a case where the word A is an "SIP nozzle" and the word B is a "vacuum nozzle", the match substring is a "nozzle", the left mismatch substring of the word A is "SIP", and the left mismatch substring of the word B is "vacuum".

Subsequently, the synonym extraction rule applying unit 150 determines whether the length of the left mismatch substring of the word A or the left mismatch substring of the word B is 1 or less (S1714). In a case where the length of the left mismatch substring of either of the words is 1 or less (S1714: YES), the process proceeds to S1716.

On the other hand, in a case where the length of the left mismatch substring of both the word A and the word B is 2 or more (S1714: NO), the process proceeds to S1715, and the synonym extraction rule applying unit 150 generates the mismatch substring table 116 having a record in which the left mismatch substring of the word A and the left mismatch substring of the word B are set.

In step S1716, the synonym extraction rule applying unit 150 acquires, for each of the word A and the word B, all the character strings existing on the right side of the match substrings as right mismatch substrings of the word A and the word B. For example, in a case where the word A is a "rinse tube" and the word B is a "rinse nozzle", the match substring is "rinse", the right mismatch substring of the word A is a "nozzle", and the right mismatch substring of the word B is a "tube".

Subsequently, the synonym extraction rule applying unit 150 determines whether a length of the right mismatch substring of the word A or the right mismatch substring of the word B is 1 or less (S1717). In a case where the length of the right mismatch substring of any of the words is 1 or less (S1717: YES), the synonym extraction rule applying unit 150 generates an empty mismatch substring table 116 (no value is set), and ends the mismatch substring specifying process S1615 (S1719).

On the other hand, in a case where the length of the right mismatch substring of both the word A and the word B is 2 or more (S1717: NO), the synonym extraction rule applying unit 150 generates the mismatch substring table 116 having a record in which the right mismatch substring of the word A and the right mismatch substring of the word B are set (S1718), the mismatch substring specifying process S1615 is ended, and the process proceeds to the next step of the caller.

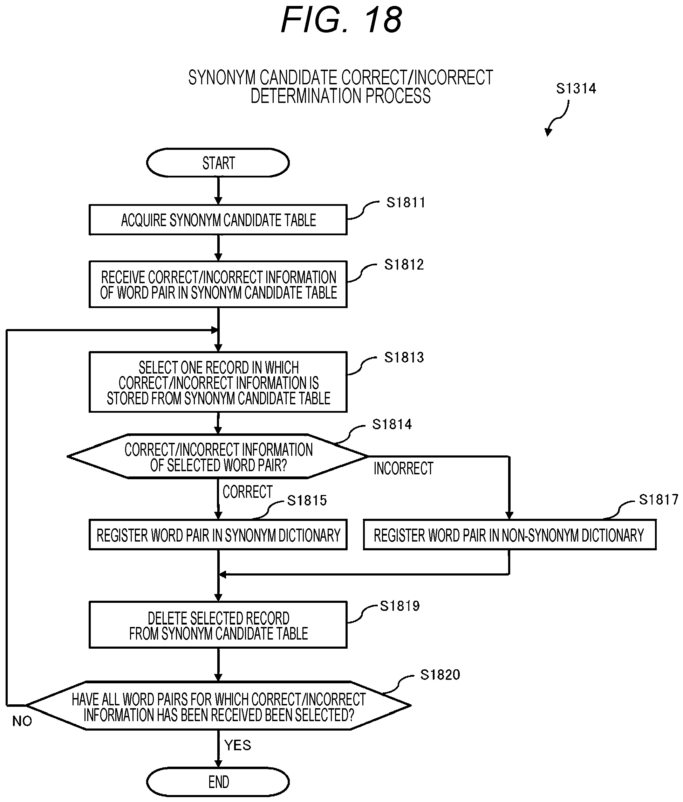

FIG. 18 is a flowchart for describing details of the synonym candidate correct/incorrect determination process S1314 illustrated in FIG. 13. Hereinafter, the synonym candidate correct/incorrect determination process S1314 will be described with reference to FIG. 18.

First, the synonym candidate correct/incorrect determination unit 160 acquires the synonym candidate table 115 (S1811).

Subsequently, the synonym candidate correct/incorrect determination unit 160 receives an input of correct/incorrect information for the word pair stored in the synonym candidate table 115 from the user via the user apparatus 2 (S1812). For example, the user apparatus 2 displays a screen (hereinafter, referred to as a "correct/incorrect determination input screen 1900") on which a list of word pairs in the synonym candidate table 115 is written and which has an input field of correct/incorrect information of the word pair, and receives an input of correct/incorrect information of each word pair from the user.

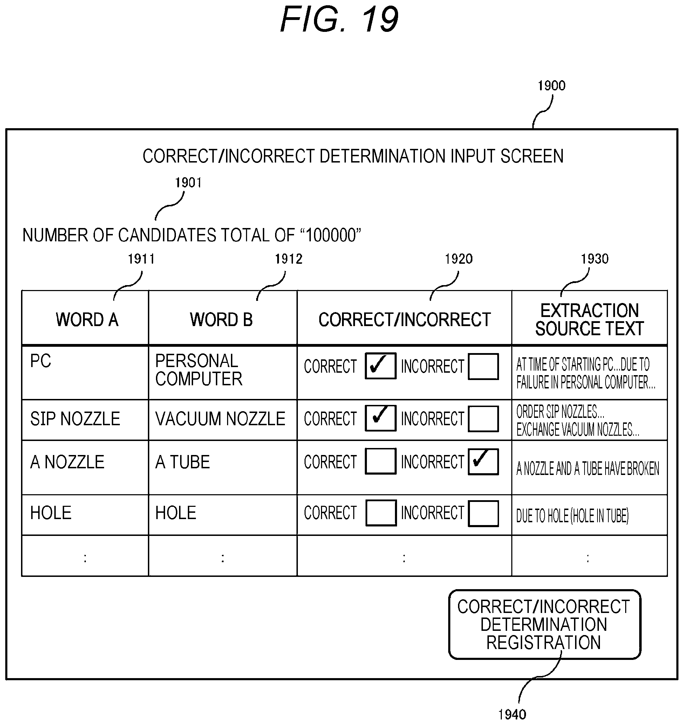

FIG. 19 illustrates an example of the correct/incorrect determination input screen 1900. The exemplified correct/incorrect determination input screen 1900 includes a display field 1901 for a total number of word pairs that are synonym candidates, a display field (a display field 1911 for the word A and a display field 1912 for the word B) for word pairs written in the synonym candidate table 115, a correct/incorrect information input field 1920, a display field 1930 for a document (text data) that is an extraction source of the word pair, and a correct/incorrect determination registration button 1940.

For example, the user inputs correct/incorrect information of each word pair by operating a check box displayed in the correct/incorrect information input field 1920 while referring to content of the display field 1930 for the document (text data) that is an extraction source of the word pair. Note that the user does not need to input correct/incorrect information for all synonym candidates (word pairs) displayed on the correct/incorrect determination input screen 1900. Even in a case where correct/incorrect information is not input for all the synonym candidates, a synonym extraction rule is generated by using the input correct/incorrect information, and it is determined whether or not a synonym candidate for which the correct/incorrect information is not input is a synonym in the synonym extraction rule applying process S1313.

Returning to FIG. 18, subsequently, the synonym candidate correct/incorrect determination unit 160 selects one record (a record in which correct/incorrect information 1153 is stored) in which correct/incorrect information is received from the user from the synonym candidate table 115 (S1813).

Subsequently, the synonym candidate correct/incorrect determination unit 160 checks a value stored in the correct/incorrect information 1153 of the selected record (S1814). In a case where "correct" is stored in the correct/incorrect information 1153 (S1814: correct), the synonym candidate correct/incorrect determination unit 160 registers the synonym candidate (word pair) of the record in the synonym dictionary 121 (S1815). Thereafter, the process proceeds to S1819. On the other hand, in a case where "incorrect" is stored in the correct/incorrect information 1153 of the selected record (S1814: incorrect), the synonym candidate correct/incorrect determination unit 160 registers the word pair in the non-synonym dictionary 122 (S1817). Thereafter, the process proceeds to S1819.

In S1819, the synonym candidate correct/incorrect determination unit 160 deletes the record from the synonym candidate table 115 (S1819).

In S1820, the synonym candidate correct/incorrect determination unit 160 determines whether all the synonym candidates (word pairs) for which correct/incorrect information has been received have been selected from the synonym candidate table 115 in S1813 (S1820). In a case where all the word pairs have been selected (S1820: NO), the process returns to S1813, and the synonym candidate correct/incorrect determination unit 160 performs processing on the next synonym candidate (word pair). On the other hand, in a case where all the synonym candidates (word pairs) have been selected (S1820: YES), the synonym candidate correct/incorrect determination process S1314 is ended, and the process proceeds to the next step (synonym extraction rule generation process S1315) of the synonym determination process S1300.

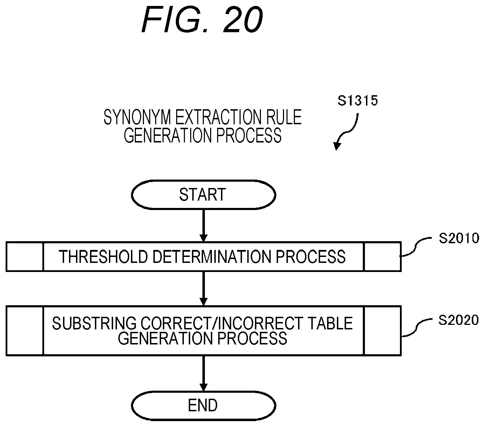

FIG. 20 is a flowchart for describing details of the synonym extraction rule generation process S1315 in FIG. 13. As illustrated in FIG. 20, the synonym extraction rule generation process S1315 includes a threshold determination process 2010 and a substring correct/incorrect table generation process S2020.

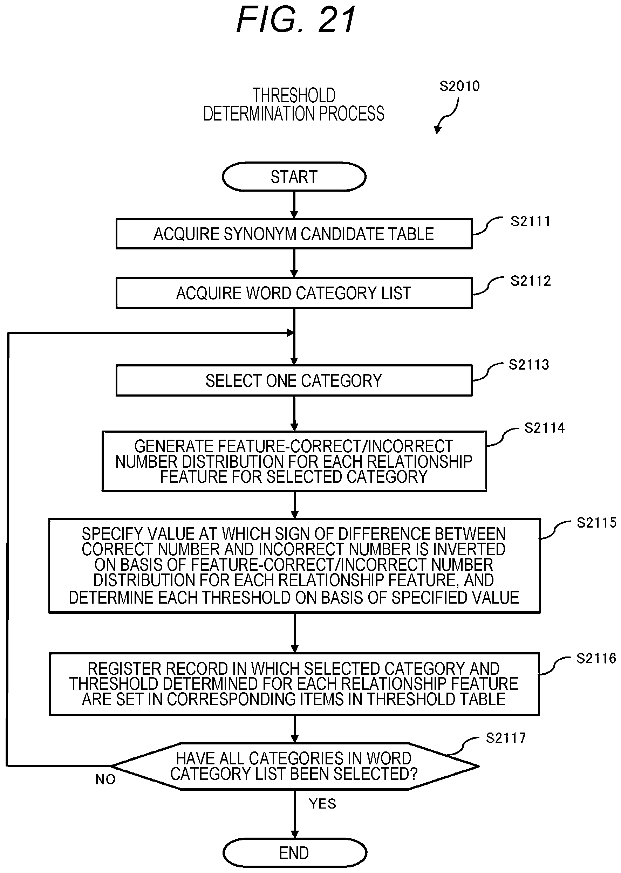

FIG. 21 is a flowchart illustrating details of the threshold determination process S2010 illustrated in FIG. 20. In the threshold determination process 2010, the threshold determination unit 181 updates the threshold table 117 on the basis of the synonym candidate table 115. Hereinafter, the threshold determination process S2010 will be described with reference to FIG. 21.

First, the threshold determination unit 181 acquires the synonym candidate table 115 (S2111).

Subsequently, the threshold determination unit 181 acquires the word category list 112 (S2112).

Subsequently, the threshold determination unit 181 selects one category from the word category list 112 (52113) .

Subsequently, the threshold determination unit 181 generates a feature-correct/incorrect number distribution that is a distribution according to values of relationship features of the number of word pairs for which "correct" is stored (hereinafter, referred to as a "correct number") in the correct/incorrect information 1153 and the number of word pairs in which "incorrect" is stored (hereinafter, referred to as an "incorrect number") in the correct/incorrect information 1153 on the basis of the synonym candidate table 115 for each relationship feature for the selected category (S2114).

Subsequently, the threshold determination unit 181 specifies a value at which a sign of a difference between the "correct number" and the "incorrect number" is inverted on the basis of the feature-correct/incorrect number distribution for each relationship feature, and sets each threshold on the basis of the specified value (S2115).

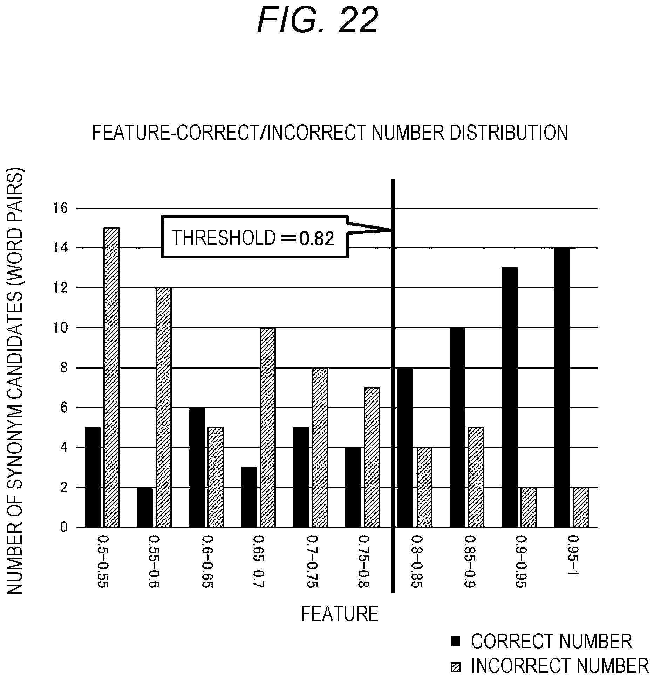

FIG. 22 illustrates an example of a feature-correct/incorrect number distribution of a certain relationship feature. In the case of this example, since a difference between the correct number and the incorrect number is inverted in the values of the relationship features of "0.75-0.8" and "0.8-0.85", the threshold determination unit 181 sets a threshold of the relationship features to "0.82", for example. Note that a method of setting a threshold as described above is merely an example, and a threshold may be set according to other methods (for example, a predetermined margin is provided from the inverted portion, a value at which a product of an accuracy and a reproduction rate is maximum is set as a threshold, or the like). For example, a setting of a threshold may be received from the user via the user apparatus 2. In that case, the graph as illustrated in FIG. 22 may be presented to the user.

Returning to FIG. 21, subsequently, the threshold determination unit 181 registers a record in which the selected category is stored in the word category 1171 and the threshold of each relationship feature determined in S2115 is stored in a corresponding item (the category association probability threshold 1172, the appearance number threshold 1173, the co-occurrence frequency threshold 1174, and the editing distance threshold 1175) in the threshold table 117 (S2116).

Subsequently, the threshold determination unit 181 determines whether or not all categories in the word category list 112 have been selected in S2113 (S2117) . In a case where there is an unselected category (S2113: NO), the process returns to S2113, and processes similar to the above processes are performed on the unselected category. In a case where all the categories have been selected (S2117: YES), the threshold determination process S2010 is ended, and the process proceeds to the next step of the synonym extraction rule generation process S1315 (substring correct/incorrect table generation process S2020) .

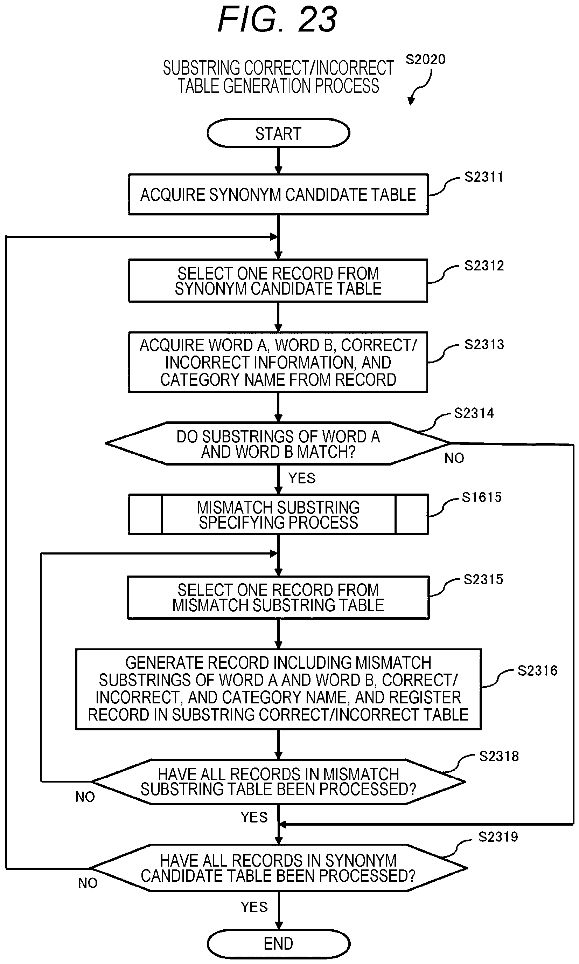

FIG. 23 is a flowchart for describing details of the substring correct/incorrect table generation process S2020 illustrated in FIG. 20. In the substring correct/incorrect table generation process S2020, the substring correct/incorrect table generation unit 182 of the synonym extraction rule generation unit 180 determines whether there is a similarity between the mismatch substrings of the synonym candidates (word pair) in the synonym candidate table 115 on the basis of the value of the correct/incorrect information 1153 in the synonym candidate table 115, and stores a determination result in the correct/incorrect information 1184 in the substring correct/incorrect table 118. Hereinafter, the substring correct/incorrect table generation process S2020 will be described with reference to FIG. 23.

First, the substring correct/incorrect table generation unit 182 acquires the synonym candidate table 115 (S2311).

Subsequently, the substring correct/incorrect table generation unit 182 selects one record from the synonym candidate table 115 (S2312).

Subsequently, the substring correct/incorrect table generation unit 182 acquires the values stored in the synonym candidates (a word pair: the word A 1151 and the word B 1152), the correct/incorrect information 1153, and the word category 1154 from the record selected in S2312 (S2313).

Subsequently, the substring correct/incorrect table generation unit 182 determines whether there is a match substring in the synonym candidates (word pair) of the selected record (S2314). For example, in a case where the word A is an "SIP nozzle" and the word B is a "vacuum nozzle" , the substring "nozzle" matches, and thus the substring correct/incorrect table generation unit 182 determines that the synonym candidates (word pair) have a match substring.

In a case where there is no match substring in the synonym candidates (word pair) (S2314: NO), the process proceeds to S2319. On the other hand, in a case where there is a match substring (S2324: YES), the substring correct/incorrect table generation unit 182 executes the mismatch substring specifying process S1615 illustrated in FIG. 17 to specify a mismatch substring, and generates the mismatch substring table 116 including the specified mismatch substring.

Subsequently, the substring correct/incorrect table generation unit 182 selects one record from the mismatch substring table 116 generated in S1615 (S2315).

Subsequently, the substring correct/incorrect table generation unit 182 generates a record in which the content of the mismatch substrings (the substring A 1161 and the substring B 1162) of the word A and the word B of the selected record, the correct/incorrect information 1153 acquired in S2323, and the word category 1154 are stored in corresponding items (the substring A 1182, the substring B 1183, the correct/incorrect information 1184, and the word category 1181), and registers the record in the substring correct/incorrect table 118 (S2316).

Subsequently, the substring correct/incorrect table generation unit 182 determines whether or not all records in the mismatch substring table 116 have been selected in S2315 (S2318). In a case where all the records have not been selected (S2318: NO), the process returns to S2315, and an unselected record is selected and processes similar to the above processes are performed. On the other hand, in a case where all the records have been selected (S2318: YES), the process proceeds to S2319.

In S2319, the substring correct/incorrect table generation unit 182 determines whether all records in the synonym candidate table 115 have been selected in S2312. In a case where all the records have not been selected (S2319: NO), the process returns to S2312, and an unselected record is selected and processes similar to the above processes are performed. On the other hand, in a case where all the records have been selected (S2319: YES), the substring correct/incorrect table generation process S2020 is ended. The synonym extraction rule generation process S1315 is ended, and the process proceeds to the next step (S1316) of the synonym determination process S1300.

Returning to FIG. 13, subsequently, the synonym determination apparatus 100 receives, from the user, the presence or absence of a request for re-presenting the synonym candidate table 115 (S1316). This reception is performed via, for example, a screen (hereinafter, referred to as a "re-presentation necessity check dialog 1960") displayed on the user apparatus 2 when the user operates the correct/incorrect determination registration button 1940 on the correct/incorrect determination input screen 1900 illustrated in FIG. 19. For example, the user requests re-presentation when trying to set correct/incorrect information in synonym candidates (word pair) in the synonym candidate table 115 updated by applying the synonym extraction rules to the synonym candidate table 115 through the synonym extraction rule applying process S1313.

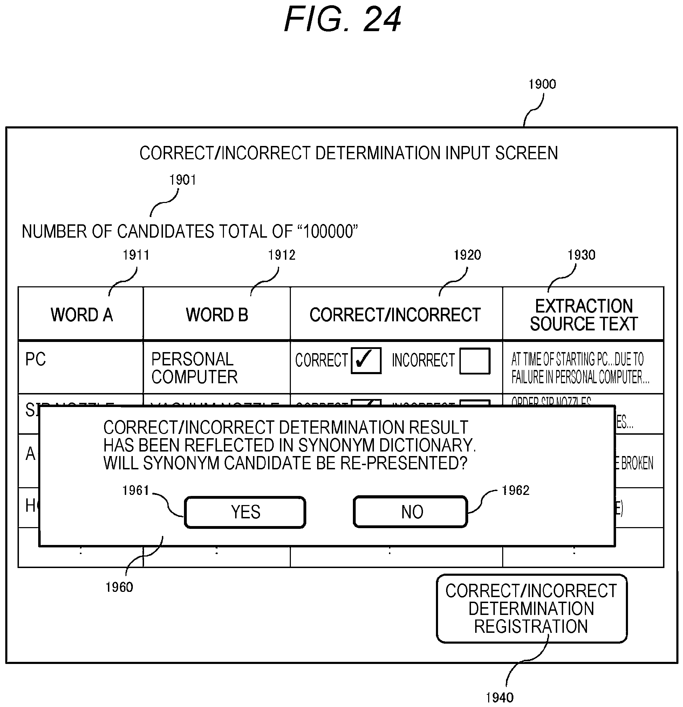

FIG. 24 illustrates an example of the re-presentation necessity check dialog 1960. As illustrated in FIG. 24, the exemplified re-presentation necessity check dialog 1960 is provided with a "Yes" button 1961 and a "No" button 1962. In a case where re-presentation is requested, the user operates the "Yes" button 1961. In a case where re-presentation is not requested, the user operates the "No" button 1962.

Returning to FIG. 13, in a case where the user operates the "Yes" button 1961 (S1316: YES), the process returns to S1313, and the synonym determination apparatus 100 applies the synonym extraction rules (the threshold table 117 and the substring correct/incorrect table 118) updated on the basis of the correct/incorrect information received from the user to the synonym candidate table 115, and executes the process from S1314 again. In this case, the synonym determination apparatus 100 presents the correct/incorrect determination input screen 1900 in which a list of word pairs in the synonym candidate table 115 updated by applying the updated synonym extraction rules is written to the user via the user apparatus 2, and receives an input of correct/incorrect determination again. In a case where the user operates the "No" button 1962 in the re-presentation necessity check dialog 1960 (S1316: NO), the synonym determination process S1300 is ended.

As described above, the processes in S1313 to S1316 are repeatedly executed such that the synonym extraction rules are updated, and the synonym extraction rules are applied to the synonym candidate table 115, and thus synonyms are automatically registered in the synonym dictionary 121 and non-synonyms are automatically registered in the non-synonym dictionary 122.

As described above, the synonym determination system 1 according to the present embodiment generates the synonym extraction rules (the threshold table 117 and the substring correct/incorrect table 118) on the basis of the correct/incorrect information for some of the synonym candidates, and extracts synonyms and non-synonyms from the document data by applying the generated synonym extraction rules to other synonym candidates. Therefore, the user can efficiently create the synonym dictionary 121 and the non-synonym dictionary 122 with a small load. The synonym determination system 1 generates the synonym extraction rules (the threshold table 117 and the substring correct/incorrect table 118) on the basis of the correct/incorrect information input by the user (by using information determined by a person), and can thus accurately extract a synonym or a non-synonym even in a case where there is little document data.

Although one embodiment of the present invention has been described above, the present invention is not limited to the above embodiment, and it goes without saying that various modifications can be made without departing from the concept of the present invention. For example, the above embodiment has been described in detail in order to describe the present invention in an easy-to-understand manner, and is not necessarily limited to that having all the described configurations. It is possible to add, delete, or replace other configurations for a part of the configuration of the above embodiment.

Some or all of the above-described configurations, functional units, processing units, processing means, and the like may be realized by hardware, for example, by designing with an integrated circuit. Each of the above-described configurations, functions, and the like may be realized by software by a processor interpreting and executing a program for realizing each function. Information such as a program, a table, and a file for realizing each function can be stored in a recording device such as a memory, a hard disk, or a solid state drive (SSD), or a recording medium such as an IC card, an SD card, or a DVD.

The arrangement form of the various functional units, the various processing units, and the various databases of each information processing apparatus described above is merely an example. The arrangement form of the various functional units, the various processing units, and the various databases can be changed to an optimal arrangement form from the viewpoint of performance, processing efficiency, communication efficiency, and the like of hardware and software included in these devices.

A configuration (schema or the like) of the database that stores various types of data described above can be flexibly changed from the viewpoints of efficient use of resources, improvement in processing efficiency, improvement in access efficiency, improvement in search efficiency, and the like.

### List of Reference Signs

1 synonym determination system
2 user apparatus
4 data management apparatus
110 storage unit
111 document information table
112 word category list
113 word category determination model
114 word table
115 synonym candidate table
116 mismatch substring table
117 threshold table
118 substring correct/incorrect table
121 synonym dictionary
122 non-synonym dictionary
130 word extraction processing unit
140 synonym candidate generation unit
150 synonym extraction rule applying unit
160 synonym candidate correct/incorrect determination unit
170 mismatch substring specifying unit
180 synonym extraction rule generation unit
181 threshold determination unit
182 substring correct/incorrect table generation unit
1900 correct/incorrect determination input screen
1960 re-presentation necessity check dialog
S1300 synonym determination process
S1311 word extraction process
S1312 synonym candidate generation process
S1313 synonym extraction rule applying process
S1314 synonym candidate correct/incorrect determination process
51315 synonym extraction rule generation process
S2010 threshold determination process
S2020 substring correct/incorrect table generation process

## Claims

1. A synonym determination system comprising an information processing apparatus including a processor and a memory,
wherein correct/incorrect information that is information indicating whether or not two constituent words of a part of a plurality of synonym candidates that are a combination of two words selected from a plurality of words extracted from document data are synonyms is acquired,
a synonym extraction rule that is information for determining whether or not the two constituent words of the synonym candidates are synonyms is generated on the basis of a feature of the synonym candidates acquired from the document data and the correct/incorrect information, and
the synonym candidates of which the two constituent words are synonyms are extracted by applying the synonym extraction rule to the synonym candidates for which the correct/incorrect information has not been acquired.

2. The synonym determination system according to claim 1, wherein the correct/incorrect information is information acquired by being received from a user via a user interface.

3. The synonym determination system according to claim 2, wherein the synonym candidates after the synonym candidates extracted by applying the synonym extraction rule are excluded from the synonym candidates for which the correct/incorrect information has not been acquired are presented to a user, and the correct/incorrect information for the synonym candidates after the exclusion is received.

4. The synonym determination system according to claim 3, wherein a screen for instructing presentation of the synonym candidates after the exclusion is presented to a user, and presentation of the synonym candidates after the exclusion and the correct/incorrect information for the synonym candidates after the synonym candidates are excluded are received in a case where the instruction is received via the screen.

5. The synonym determination system according to claim 1, wherein
the plurality of words extracted from the document data are classified into categories, and
a combination of two words belonging to the same category is set as the synonym candidates.

6. The synonym determination system according to claim 1, wherein the feature is at least one of a co-occurrence frequency of the two constituent words of the synonym candidates, an editing distance of the two constituent words, and a number of appearances in the document data that is an extraction source of each of the two constituent words.

7. The synonym determination system according to claim 5, wherein the feature is information indicating a degree of association with the category of each of the two constituent words of the synonym candidates.

8. The synonym determination system according to claim 1, wherein the synonym candidates of which the two constituent words are not synonyms are extracted by applying the synonym extraction rule to the synonym candidates.

9. The synonym determination system according to claim 1, wherein a mismatch substring that is a portion in which character strings of the two constituent words of the synonym candidates for which the correct/incorrect information has been acquired do not match is specified,
substring correct/incorrect information is generated as the synonym extraction rule, the substring correct/incorrect information being information in which the mismatch substring of each of the two constituent words and the correct/incorrect information are associated with each other, and
the synonym candidates of which the two constituent words are synonyms are extracted by specifying the mismatch substring for the two constituent words of the synonym candidates and applying the synonym extraction rule to the specified mismatch substring.

10. The synonym determination system according to claim 5, wherein a mismatch substring that is a portion in which character strings of the two constituent words of the synonym candidates for which the correct/incorrect information has been acquired do not match is specified,
substring correct/incorrect information is generated as the synonym extraction rule, the substring correct/incorrect information being information in which the mismatch substring of each of the two constituent words, the category to which the two constituent words belong, and the correct/incorrect information are associated with each other, and
the synonym candidates of which the two constituent words of the synonym candidates are synonyms are extracted by specifying the mismatch substring for the two constituent words of the synonym candidates and applying the substring correct/incorrect information of the category to which the two constituent words belong as the synonym extraction rule.

11. The synonym determination system according to claim 1, wherein a feature-correct/incorrect number distribution, which is a distribution of the number of synonym candidates for which the correct/incorrect information is correct and the number of synonym candidates for which the correct/incorrect information is incorrect with respect to a value of the feature for the synonym candidates for which the correct/incorrect information is acquired, is obtained,
a threshold of the feature is determined on the basis of the feature-correct/incorrect number distribution, and
the determined threshold is set as the synonym extraction rule.

12. The synonym determination system according to claim 11, wherein a screen displaying the feature-correct/incorrect number distribution and the threshold is presented to a user.

13. The synonym determination system according to claim 1, wherein a synonym dictionary is stored, and
the synonym candidates extracted as two words that are synonyms are registered in the synonym dictionary.

14. The synonym determination system according to claim 8, wherein a non-synonym dictionary is stored, and
the synonym candidates extracted as two words that are not synonyms are registered in the non-synonym dictionary.

15. A synonym determination method of causing an information processing apparatus including a processor and a memory to execute:
a step of acquiring correct/incorrect information that is information indicating whether or not two constituent words of a part of a plurality of synonym candidates that are a combination of two words selected from a plurality of words extracted from document data are synonyms;
a step of generating a synonym extraction rule that is information for determining whether or not the two constituent words of the synonym candidates are synonyms on the basis of a feature of the synonym candidates acquired from the document data and the correct/incorrect information; and
a step of extracting the synonym candidates of which the two constituent words are synonyms by applying the synonym extraction rule to the synonym candidates for which the correct/incorrect information has not been acquired.
